Europäisches Patentamt

European Patent Office

Office européen des brevets

(19)

(11) Veröffentlichungsnummer: **0 419 964 A2**

# EUROPÄISCHE PATENTANMELDUNG

(12)

(21) Anmeldenummer: 90117703.0

(22) Anmeldetag: 14.09.90

(51) Int. Cl.5: **C09C 1/24**

(30) Priorität: 27.09.89 DE 3932166

(43) Veröffentlichungstag der Anmeldung:
03.04.91 Patentblatt 91/14

(84) Benannte Vertragsstaaten:
**BE DE FR GB IT NL**

(71) Anmelder: **BAYER AG**

**W-5090 Leverkusen 1 Bayerwerk(DE)**

(72) Erfinder: **Rademachers, Jakob, Dr.**
**Hoeninghausstrasse 4**
**W-4150 Krefeld(DE)**
Erfinder: **Bockelmann, Wolfgang, Dr.**
**Bodelschwinghstrasse 32**
**W-4150 Krefeld 1(DE)**
Erfinder: **Woditsch, Peter, Dr.**
**Deswatinesstrasse 83**
**W-4150 Krefeld 1(DE)**

(54) **Eisenoxidrot- und Eisenoxid-braun-Mikrogranulate, Verfahren zu ihrer Herstellung sowie deren Verwendung.**

(57) Die Erfindung betrifft Mikrogranulate, die aus Eisenoxidrot- oder Eisenoxidbraun-Pigmenten bestehen, Verfahren zu ihrer Herstellung sowie deren Verwendung.

EP 0 419 964 A2

# EISENOXIDROT- UND EISENOXIDBRAUN-MIKROGRANULATE, VERFAHREN ZU IHRER HERSTELLUNG SOWIE DEREN VERWENDUNG.

Die vorliegende Erfindung betrifft Mikrogranulate, die aus Eisenoxidrot- oder Eisenoxidbraun-Pigmenten bestehen, Verfahren zu ihrer Herstellung sowie deren Verwendung.

Eisenoxidrotpigmente bestehen aus feinteiligem Hämatit mit Korundstruktur, Eisenoxidbraunpigmente sind in der Regel aus Mischungen von Hämatit (Eisenoxidrot) mit Magnetit (Eisenoxidschwarz) und Goethit (Eisenoxidgelb) zusammengesetzt. Sie können auch als homogenes Produkt aus Maghämit bestehen, der im Spinellgitter kristallisiert. Beide Pigmente, Eisenoxidrot und Eisenoxidbraun stellen chemisch gesehen $Fe_2O_3$ dar. Während Eisenoxidrot mit $\alpha\text{-}Fe_2O_3$ bezeichnet wird, läßt sich das einheitliche Eisenoxidbraun mit $\gamma\text{-}Fe_2O_3$ charakterisieren (Ullmanns Encyklopädie der techn. Chemie, Verlag Chemie GmbH, Weinheim 1979, 4. Aufl., Bd. 18, S. 600-604).

Die Herstellung der Eisenoxidrotpigmente kann auf verschiedenen Wegen erfolgen. Eine der häufig durchgeführten Methoden ist die Glühung von Eisenoxidschwarz oder Eisenoxidgelb in oxidierender Atmosphäre bei Temperaturen um 800° C. In gleicher Weise, jedoch bei niedrigeren Temperaturen von etwa 200 bis 600° C, erhält man das homogene Eisenoxidbraun, je nach Temperatur in unterschiedlicher Nuancierung.

Die Eisenoxidgelbpigmente werden gewöhnlich über das Fällungsverfahren erhalten. Hierbei werden Eisen(II)-salze mit Alkalien unter Oxidation, meist durch Begasung mit Luft, gezielt entweder im sauren oder stark alkalischen Bereich zu Goethit ($\alpha\text{-}FeOOH$) umgesetzt. Ein weiteres Verfahren besteht in der Hydrolyse von vorher durch Luft oxidierten Eisen(II)-salzlösungen in Gegenwart von metallischem Eisen (Penniman-Verfahren).

Die aus $Fe_3O_4$ bestehenden Eisenoxidschwarzpigmente lassen sich ebenfalls durch Fällung aus Eisen(II)-salzlösungen unter Einleiten von Luft in der Nähe des Neutralpunktes erhalten. Auch wird die Herstellung des Schwarzpigmentes durch Reduktion von aromatischen Nitro-Verbindungen zu den entsprechenden Aminen mit metallischem Eisen durchgeführt.

Bei den erwähnten Verfahren fallen die Pigmente als Zwischenprodukt in Form wäßriger Suspensionen an, die filtriert und gewaschen werden. Der endgültige Verfahrensschritt zum fertigen Pigment erfolgt über die Trocknung der erhaltenen Filterkuchen mit abschließender Mahlung.

Zur Anwendung gelangen die Eisenoxidpigmente in dieser feingemahlenen Pulverform. Der Nachteil besteht darin, daß die Pulver zum Stauben neigen, beim Transport und bei der Lagerung leicht verklumpen können und schwer dosierbar sind.

Aus diesem Grunde ist in der DE-A 3 619 363 vorgeschlagen worden, unter anderem auch Eisenoxidpigmente als Perlgranulat in Form von Mikrogranulat einzusetzen, wobei 90 % der Pigmentteilchen eine Größe von 20 bis 500 µm besitzen. Die Herstellung der Mikrogranulate erfolgt in Sprühtrocknern durch Zerstäuben eines Gemisches von Pigment und einer Flüssigkeit, vorzugsweise Wasser unter Zusatz eines Bindemittels in einem Sprühturm durch Einstoff- oder Mehrstoffdüsen bzw. Zerstäuberscheiben.

Dieses Verfahren hat für Eisenoxidrot- und Braunpigmente den Nachteil, daß von fertigen Pigmenten ausgegangen werden muß.

Die Aufgabe der vorliegenden Erfindung besteht nun darin, Eisenoxidrot- und Braunpigmente auf einfacherem Weg mit weniger Verfahrensschritten herzustellen.

Diese Aufgabe wurde dadurch gelöst, daß wäßrige Eisenoxidgelb- und/oder Eisenoxidschwarz-Suspensionen der Sprühgranuliertrocknung zugeführt und die erhaltenen Mikrogranulate mit Durchmessern von 20 bis 600 µm entweder unmittelbar oder nachgeschaltet bei Temperaturen von 200 bis 1000° C behandelt werden.

Der Vorteil dieses Verfahrens besteht darin, daß nicht von fertigen Eisenoxidrot- oder -braunpigmenten zur Herstellung der Mikrogranulate mit der Notwendigkeit des Wiederanmaisch- und Trockenschrittes ausgegangen wird, sondern die Herstellung des Rot- oder Braunpigmentes durch Glühen von Schwarz- und/oder Gelbpigmenten mit der Herstellung der Mikrogranulate verbunden wird.

Durch die Notwendigkeit des oxidierenden Temperns nach dem erfindungsgemäßen Verfahren erfahren die Schwarz-oder Gelbpigmentmikrogranulate eine chemische Umsetzung. Desto erstaunlicher ist es, daß die Mikrogranulate durch den Umwandlungsprozeß in ihrer mechanischen Stabilität nicht beeinflußt werden und nicht auseinanderbrechen.

Durch das erfindungsgemäße Verfahren werden handhabungsstabile, nicht staubende und nicht zu Verklumpungen neigende, frei fließende und gut dosierbare Pigmentmikrogranulate erhalten.

Vorteilhafterweise werden für das erfindungsgemäße Verfahren Filterkuchen, gegebenenfalls unter Zufügen von Wasser, aus dem Herstellungsprozeß von Eisenoxidgelb-und Eisenoxidschwarzpigmenten nach dem Fällungs- oder Nitrobenzolreduktionsverfahren eingesetzt. Der Temperschritt erfolgt, insbesondere bei Eisenoxidschwarz-Ausgangsmaterial, in oxidierender Atmosphäre.

Für die Herstellung von Eisenoxidbraunmikrogranulaten genügen Behandlungstemperaturen von 200 bis 600°C. Für Eisenoxidrotpigmente sollten Temperaturen von 700 bis 900°C eingehalten werden.

Als Glühanlage werden bei gleichzeitiger Granuliertrocknung und Temperung Heißgassprühreaktoren, z.B. Reaktionszyklone, bevorzugt.

Aber auch die Aufteilung von Granuliertrocknung und Glühung ist Gegenstand der Erfindung. Während für den ersten Schritt der Sprühgranuliertrocknung Sprühtürme mit langsam laufenden Scheiben oder Druckdüsen, auch in Kombination mit Fließbetten oder Fließbett-Trockner allein, geeignet sind, werden für den zweiten Verfahrensschritt bevorzugt direkt- oder indirekt beheizte Drehrohröfen eingesetzt. Ebenso kann die Temperung durch Blitzkalzination in einer Hochtemperaturkammer erfolgen.

Es ist durchaus möglich, die nach dem Glühprozeß erhaltenen Mikrogranulate ohne Nachteile zu Pigmentpulver zu vermahlen. Für die Herstellung von Mikrogranulaten und Pulver sind demnach keine getrennten Anlagen erforderlich. Es hat sich im Gegenteil, insbesondere bei der Herstellung von Rotpigmenten gezeigt, daß die Glühung von Mikrogranulaten farbtonmäßig zu besseren Pigmenten führt.

Den Ausgangssuspensionen der Gelb- oder Schwarzpigmente können auch Verflüssiger oder Bindemittel, sowohl organischer wie auch anorganischer Art, zugesetzt werden. Während die organischen Zusatzmittel, beispielsweise Carboxymethylcellulose, Melasse oder Polyacrylate, durch den nachfolgenden Temperschritt in ihrer Wirkung negativ beeinflußt werden können, behalten Bindemittel anorganischer Art wie beispielsweise Wasserglas, Kieselsol, Aluminate ihre Wirkung größtenteils bei.

Gegenstand der Erfindung sind auch die nach dem erfindungsgemäßen Verfahren erhältlichen Eisenoxidrot- und Eisenoxidbraunpigment-Mikrogranulate. Die erhaltenen Granulate weisen bevorzugt eine Agglomeratgröße von 20 bis 600 μm, vorzugsweise 100 bis 300 μm, auf, je nach Art der Verdüsung und Feststoff-Konzentration der eingesetzten Suspension. Werden die Suspensionen einer Sprüh-Fließbett-Anlage zugeführt, kann die Größe der Agglomerate 200 bis 5.000 μm betragen.

Ein weiterer Gegenstand der Erfindung besteht in der Verwendung der erfindungsgemäßen Eisenoxidrot- und -braunpigment-Mikrogranulate zum Einfärben von Baustoffen, Lacken, Kunststoffen und Papier.

Das Verfahren der Erfindung soll an folgenden Beispielen näher erläutert werden. Es ist darin jedoch keine Einschränkung auf die Beispiele zu sehen.

Im Falle der aufgeführten Beispiele wurde die Bestimmung der Auslaufzeit mit dem 4 mm-DIN-Becher (DIN 53 211 vom April 1974) analog auf die zu prüfenden Mikrogranulate angewandt.

Beispiel 1

Der als Zwischenprodukt bei der Herstellung des Eisenoxidrotpigmentes Bayferrox 120 N anfallende Eisenoxidschwarzschlamm wird mit 1,0 Gew.-% Polystabil AMV-Lösung (Handelsprodukt der Chemischen Fabrik Stockhausen GmbH) entsprechend 0,4 Gew.-% Ammoniumpolyacrylat, auf Eisenoxidschwarz bezogen, versetzt und mit 53 Gew.-% Feststoffanteil einem Sprühtrockner zugeführt. Die Temperaturen der Heißgase betragen am Eintritt des Trockners 350°C, am Austritt 100°C. Die Suspension gelangt über eine Kolbenmembranpumpe mit einem Vordruck von 9 bar zu einer Flüssigkeitsdruckdüse, in der die Zerstäubung erfolgt. Erhalten wird ein Trockenprodukt in Kugelform mit Durchmessern von 100 bis 250 μm. Diese Eisenoxidschwarz-Mikrogranulate ergeben beim Glühen in einem Drehrohrofen in oxidierender Atmosphäre bei 800°C handhabungsstabile Eisenoxidrot-Mikrogranulate, deren Kugelform und Größe mit den eingesetzten Schwarzgranulaten im wesentlichen übereinstimmen. Sie sind handhabungsstabil, neigen nicht zum Stauben und zeigen mit Auslaufzeiten aus dem 4 mm-DIN-Becher von 60 Sekunden ein gutes Fließverhalten. Im Vergleich zu Glühungen von pulverförmigen Eisenoxidschwarz-Ausgangsmaterialien ergeben die Mikrogranulate durch die gleichmäßigere Temperung ein Eisenoxidrot mit geringer Versinterung, das sich durch einen geringeren Blaustich im Farbton bemerkbar macht.

Beispiel 2

Es wird verfahren wie in Beispiel 1 mit dem Unterschied, daß die Eisenoxidschwarz-Mikrogranulate nicht bei 800°C, sondern bei 450°C in oxidierender Atmosphäre getempert werden. Man erhält ein Eisenoxidbraun in Mikrogranulatform, gut fließfähig mit Auslaufzeiten von 61 Sekunden, handhabungsstabil und nicht staubend. Die Granulatdurchmesser betragen wie das Ausgangsgranulat 100 bis 250 μm. Der Farbton ist mit dem unter gleichen Bedingungen geglühten Pulver identisch.

Beispiel 3

Eine wäßrige Suspension aus der Fabrikation des Eisenoxidgelbs Bayferrox 920 (Handelsprodukt der Bayer AG) mit 27 Gew.-% Goethit wird über eine Düse in einem Hochtemperatur-Reaktionszyklon zerstäubt. Bei 850°C Reaktortemperatur erhält man nach der Blitzkalzination in oxidierender Atmosphäre ein fließfähiges Eisenoxidrot-Mikrograulat mit ansprechendem Farbton. Der Durchmesser der handhabungsstabilen Mikrogranulate liegt bei 20 bis 100 μm.

Beispiel 4

Anstelle von wäßriger Eisenoxidgelb-Suspension wird die Eisenoxidschwarz-Suspension aus Beispiel 1 dem Hochtemperatur-Reaktionszyklon zugeführt. Sonst wird verfahren wie in Beispiel 3. Man erhält ein feinteiliges, nicht staubendes Mikrogranulat aus Eisenoxidrot mit Durchmessern von 50 bis 150 μm.

**Ansprüche**

1. Verfahren zur Herstellung von Eisenoxidrot- oder Eisenoxidbraunpigment-Mikrogranulaten, dadurch gekennzeichnet, daß wäßrige Eisenoxidgelb- und/oder Eisenoxidschwarz-Suspensionen der Sprühgranuliertrocknung zugeführt und die erhaltenen Mikrogranulate mit Durchmessern von 20 bis 600 μm entweder unmittelbar oder nachgeschaltet bei Temperaturen zwischen 200 bis 1000°C behandelt werden.

2. Verfahren gemäß Anspruch 1, dadurch gekennzeichnet, daß als wäßrige Suspension Filterkuchen, gegebenenfalls nach Zufügen von Wasser, aus dem Fällungs-oder Nitrobenzolreduktionsverfahren eingesetzt werden.

3. Verfahren gemäß einem der Ansprüche 1 oder 2, dadurch gekennzeichnet, daß der Temperschritt in oxidierender Atmosphäre erfolgt.

4. Verfahren gemäß einem oder mehreren der Ansprüche 1 bis 3, dadurch gekennzeichnet, daß vorzugsweise für Eisenoxidbraunpigment-Mikrogranulate Glühtemperaturen von 200 bis 600°C und für Eisenoxidrotpigment-Mikrogranulate Temperaturen von 700 bis 900°C eingestellt werden.

5. Verfahren gemäß einem oder mehreren der Ansprüche bis 1 bis 4, dadurch gekennzeichnet, daß der wäßrigen Suspension Bindemittel anorganischer oder organischer Art zugesetzt werden.

6. Verfahren nach einem oder mehreren der Ansprüche 1 bis 5, dadurch gekennzeichnet, daß die Granulatbildung und die Temperung in einem Verfahrensschritt, bevorzugt in einem Heißgassprühreaktor, durchgeführt wird.

7. Verfahren nach einem oder mehreren der Ansprüche 1 bis 5, dadurch gekennzeichnet, daß die Granulatbildung und die Temperung in zwei getrennten Verfahrensschritten, bevorzugt die Granulatbildung in einem Zerstäubungstrockner und die Temperung in einem Drehrohrofen oder einer Hochtemperaturkammer, durchgeführt werden.

8. Eisenoxidrot- und Eisenoxidbraunpigment-Mikrogranulate, erhältlich gemäß einem oder mehreren der Ansprüche 1 bis 7.

9. Verwendung der Eisenoxidrot- und Eisenoxidbraunpigment-Mikrogranulate gemäß einem oder mehreren der Ansprüche 1 bis 9 zur Einfärbung von Baustoffen, Lacken, Kunststoffen und Papier.

10. Verwendung der Eisenoxidrot- und Eisenoxidbraunpigment-Mikrogranulate gemäß einem oder mehreren der Ansprüche 1 bis 9 zur Herstellung von gemahlenen Eisenoxidrot- oder Eisenoxidbraunpigment-Pulvern.